# EUROPÄISCHE PATENTSCHRIFT

(11) **EP 0 235 627 B1**
(45) Veröffentlichungstag und Bekanntmachung des Hinweises auf die Patenterteilung: **28.04.1993**
(21) Anmeldenummer: 87101893.3
(22) Anmeldetag: 11.02.1987
(51) Int. Cl.: G01K 5/50, G01K 5/70

(54) **Vorrichtung zur berührungsfreien Temperaturmessung**
Device for touch-free temperature measurement
Dispositif pour mesurer la température sans contact

(30) Priorität: 06.03.1986 DE 3607368
(43) Veröffentlichungstag der Anmeldung: 09.09.1987
(73) Patentinhaber: ROBERT BOSCH GMBH, 70442 Stuttgart (DE)
(72) Erfinder: Dobler, Klaus, Dr.-Ing., D-7016 Gerlingen (DE); Hachtel, Hansjörg, Dipl.-Ing, D-7251 Weissach (DE)

(56) Entgegenhaltungen:
- DE-A- 3 425 350
- GB-A- 2 155 678
- PATENT ABSTRACTS OF JAPAN, Band 10, Nr. 371 (P-526)[2428], 11. Dezember 1986; & JP-A-61 165 628
- PATENT ABSTRACTS OF JAPAN, Band 9, Nr. 151 (P-367)[1874], 26. Juni 1985 & JP-A-60 27 827
- PATENT ABSTRACTS OF JAPAN, Band 9, Nr. 120 (P-358)[1843], 24. Mai 1985; & JP-A-60 4830
- PATENT ABSTRACTS OF JAPAN, Band 5, Nr. 175 (P-88)[847], 11. November 1981; & JP-A-56 103 333

## Beschreibung

### Stand der Technik

Die Erfindung geht aus von einer Vorrichtung zur berührungsfreien Temperaturmessung nach der Gattung des Hauptanspruchs. Es ist bekannt, durch Vergleich der Strahlung eines Meßobjekts mit einem Vergleichsstrahler (sogenanntes Vergleichspyrometer) die Temperatur berührungsfrei zu bestimmen. Pyrometer sind aber teuer,und die Messung ist sehr aufwendig. Sie sind somit nur für Einzelmessungen verwendbar und nicht für den serienmäßigen Einbau in Massenprodukten, wie z.B. in elektrischen Maschinen, geeignet.

Ferner sind Bimetallschalter bekannt, die auf dem Prinzip der unterschiedlichen Wärmeausdehnungskoeffizienten der verwendeten Werkstoffe beruhen. Aber es können damit keine Temperaturen berührungsfrei gemessen werden, sondern nur jeweils eine Schaltfunktion, z.B. ein- und ausschalten, gesteuert werden.

Aus der DE-A1 3 425 350 ist eine Vorrichtung zur berührungslosen Temperaturüberwachung bekannt, bei der im Umfang eines Rotationskörpers ein expandierendes Dehnungselement mit einer Schaltfahne angeordnet ist. Bei Temperaturerhöhung dehnt sich das Dehnungselement aus und verändert dadurch den Abstand zu einem ortsfest angeordneten Näherungsschalter. Erst bei Überschreiten einer zulässigen Temperatur verändert sich die Lage der Schaltfahne gegenüber dem Näherungselement so weit, daß je Umdrehung des Rotationsteils periodische Signale erzeugt werden. Mit dieser Vorrichtung ist es nur möglich, bei bestimmten Winkelstellungen, das hießt, wenn sich das Dehnstoffelement und der Näherungsschalter gegenüberstehen, die Temperatur zu überprüfen. Insbesondere im Stillstand ist keine Meßsignalerzeugung möglich. Um die verschiedenen Zustände sicher unterscheiden zu können, wird die Drehbewegung des Rotationsteils noch durch einen zweiten Näherungsschalter überwacht.

Die aus dem Patent Abstract of Japan, Band 9, Nr. 151 (P - 367) [1874], 26. Juni 1985 (JP-A-6 027 827) bekannte Vorrichtung zur Temperaturüberwachung weist ein auf einem Substrat aufgebrachtes Bimetall auf. Mit Hilfe eines optischen Senders wird Licht auf das Bimetall abgestrahlt. Das Licht wird dort sowohl auf der Oberfläche des Bimetalls als auch auf der Oberfläche des Substrats reflektiert und von einem Empfänger aufgenommen. Bei Änderung der Temperatur verändert sich auch die Durchbiegung des Bimetalls und somit der Reflexionswinkel des vom Sender abgestrahlten Lichtes. Die Temperatur auf dem Substrat wird dann als Unterschied zwischen der jeweiligen Reflexion auf dem Bimetall und der Reflexion auf dem Substrat bestimmt, wobei die Reflexion auf dem Substrat als Bezugsgröße dient. Diese Vorrichtung baut aber sehr aufwendig und kompliziert und ist nicht für Rotationskörper verwendbar.

Im Patent Abstract of Japan, Band 9, Nr. 120 (P - 358) [1843], 24. Mai 1985 (JP-A 604 830) wird eine Temperaturmeßeinrichtung für einen Rotationskörper beschrieben. Hierbei ist auf dem Rotationskörper ein Reflexionssystem aus mehreren Spiegeln angeordnet, um das von einem Laser ausgesandte Licht zu einem Empfänger zu reflektieren. Bei der Änderung der Temperatur auf dem Rotationskörper verändern sich die Abstände der Spiegel des Reflexionssystems, so daß sich die am Empfänger auftreffende Lichtmenge verändert. Die am Empfänger auftreffende Lichtmenge ist ein Maß für die herrschende Temperatur.

### Vorteile der Erfindung

Die erfindungsgemäße Vorrichtung mit den kennzeichnenden Merkmalen des Hauptanspruchs hat demgegenüber den Vorteil, daß die Temperatur eines Meßobjekts berührungsfrei mit geringem Aufwand gemessen werden kann. Es können dabei bewährte, preisgünstige und vor allem klein bauende Sensoren verwendet werden. Die Vorrichtung arbeitet robust und kann auch in kritischen Einsatzfällen verwendet werden. Z.B. ist sie bei rotierenden Teilen anwendbar, wenn die Temperatur des Läufers eines Elektromotors mit einfachen Mitteln und ohne großen Aufwand genau überwacht werden soll. Es muß jeweils nur eine Temperaturänderung in eine Wegänderung umgewandelt und berührungsfrei erfaßt werden.

Durch die in den Unteransprüchen aufgeführten Maßnahmen sind vorteilhafte Weiterbildungen der im Hauptanspruch angegebenen Vorrichtung möglich.

### Zeichnung

Ein Ausführungsbeispiel der Erfindung ist in der Zeichnung dargestellt und in der nachfolgenden Beschreibung näher erläutert. Die einzige Figur zeigt einen Längsschnitt durch eine Vorrichtung zur berührungsfreien Temperaturmessung.

### Beschreibung des Ausführungsbeispiels

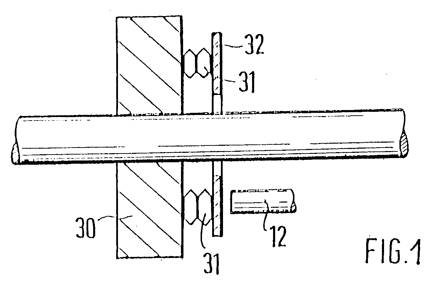

In der Figur 1 ist eine Vorrichtung dargestellt, um bei Rotation und auch bei Stillstand die Temperatur eines Bauteils zu überprüfen. Dazu sind auf der Stirnseite des Bauteils 30 mehrere Dehnstoffelemente 31 angeordnet, die einen Ring 32 tragen. Als Elemente 31 sind auch Behälter mit festen, flüssigen oder gasförmigen Dehnstoffen verwendbar. Der Ring 32 steht mit einem in einem Abstand zum Ring 32 ortsfest angeordneten Abstandssensor 12 in Wirkverbindung. Der Abstandssensor 12 erfaßt die Änderung des Abstandes bei Temperaturänderung zwischen dem Ring 32 und dem Abstandssensor 12. Bei Erhöhung der Temperatur des Bauteils dehnt sich das Dehnstoffelement proportional aus und verändert dadurch den Abstand zwischen dem Dehnstoffelement 31 und dem Abstandssensor 12. Durch Eichmessungen kann die so gemessene Abstandsänderung in genaue Temperaturwerte umgesetzt werden. Mit Hilfe einer elektronischen Auswerteschaltung, zum Beispiel mit einem Spitzenwertschalter, kann somit eine Aussage über die Temperatur des Bauteils gewonnen werden.

Selbstverständlich ist das hier aufgezeigte Prinzip der Temperaturmessung nicht nur bei Temperaturerhöhung sondern auch bei Temperaturerniedrigung anwendbar.

## Patentansprüche

1. Vorrichtung zur berührungsfreien Temperaturmessung eines Rotationskörpers (30), auf dem mindestens ein Element (31) aus einem Werkstoff mit einem anderen Wärmeausdehnungskoeffizienten als ihn der Werkstoff des Rotationskörpers (30) hat, angeordnet ist, wobei durch die bei Temperaturänderung hervorgerufene elastische Verformung des Elements (31) der Abstand zwischen dem Element (31) und mindestens einem berührungsfrei arbeitenden Sensor (12) verändert wird, so daß im Sensor (12) ein Signal hervorgerufen wird, dadurch gekennzeichnet, daß mehrere als Dehnstoffelemente (31) ausgebildete Elemente auf der Stirnseite des Rotationskörpers (30) befestigt sind und daß auf den Dehnstoffelementen (31) ein ringförmiger Körper (32) angeordnet ist.

2. Vorrichtung nach Anspruch 1, dadurch gekennzeichnet, daß der Körper (32) parallel zu einer der Stirnflächen des Rotationskörpers (30) ausgerichtet ist.

3. Vorrichtung nach Anspruch 1 oder 2, dadurch gekennzeichnet, daß der Sensor (12) und die Dehnstoffelemente (31) achsgleich angeordnet sind.

4. Vorrichtung nach einem der Ansprüche 1 bis 3, dadurch gekennzeichnet, daß drei Dehnstoffelemente (31) mit einem Abstand von ca. 120° auf der Stirnseite des Rotationskörpers (30) befestigt sind.

## Claims

1. Device for non-contact temperature measurement of a body of revolution (30), on which at least one element (31) of a material having a coefficient of thermal expansion different from that of the material of the body of revolution (30) is disposed, the spacing between the element (31) and at least one sensor (12) operating on a non-contact basis being altered by that elastic deformation of the element (31) which is caused upon an alteration in the temperature, so that a signal is generated in the sensor (12), characterised in that a plurality of elements designed as elements (31) of expanding material are secured on the end face of the body of revolution (30), and in that an annular body (32) is disposed on the elements (31) of expanding material.

2. Device according to Claim 1, characterised in that the body (32) is oriented parallel to one of the end faces of the body of revolution (30).

3. Device according to Claim 1 or 2, characterised in that the sensor (12) and the elements (31) of expanding material are disposed to be coaxial.

4. Device according to one of Claims 1 to 3, characterised in that three elements (31) of expanding material are secured at a spacing of approximately 120° on the end face of the body of revolution (30).

## Revendications

1. Dispositif de mesure de la température sans contact d'un corps de révolution (30), sur lequel est disposé un élément (31) en une matière qui a un autre coefficient de dilatation que celui qu'a la matière du corps de révolution (30), dispositif dans lequel la déformation élastique de l'élément (31) provoquée par la variation de la température modifie la distance comprise entre l'élément (31) et au moins un détecteur (12) fonctionnant sans contact, de telle sorte qu'un signal soit engendré dans le détecteur (12), dispositif caractérisé en ce que plusieurs éléments formés comme des éléments en un matériau dilatable sont fixés sur la face frontale du corps de révolution (30) et en ce que sur les éléments en matériau dilatable (31) est disposé un corps (32) ayant une forme annulaire.

2. Dispositif selon la revendication 1, caractérisé en ce que le corps (32) est orienté parallèlement à l'une des faces frontales du corps de révolution (30).

3. Dispositif selon la revendication 1 ou 2, caractérisé en ce que le détecteur (12) et les éléments en matériau dilatable (31) sont disposés selon le même axe.

4. Dispositif selon l'une des revendications 1 à 3, caractérisé en ce que trois éléments en matériaux dilatable (31) sont fixés à une distance les une des autres d'environ 120° sur la face frontale du corps de révolution (30).
